# EUROPEAN PATENT SPECIFICATION

(11) **EP 1 866 988 B1**
(45) Date of publication and mention of the grant of the patent: **20.07.2011**
(21) Application number: 06739918.8
(22) Date of filing: 29.03.2006
(51) Int. Cl.: H01M 2/28, H01M 4/68

(54) **CURRENT CARRIER FOR AN ENERGY STORAGE DEVICE**
STROMTRÄGER FÜR EINE ENERGIESPEICHERVORRICHTUNG
CONDUCTEUR DE COURANT POUR DISPOSITIF DE STOCKAGE D'ENERGIE

(30) Priority: 31.03.2005 US 666771 P
(43) Date of publication of application: 19.12.2007
(73) Proprietor: Firefly Energy Inc., Peoria, IL 61614 (US)
(72) Inventor: KELLEY, Kurtis, C., Saint George, ME 04860 (US); OSTERMEIER, Charles, F., Slater, Iowa 50244-8517 (US)
(74) Representative: Giannesi, Simona
(86) International application number: PCT/US2006/011448
(87) International publication number: WO 2006/105186

(56) References cited:
- EP-A- 0 085 400
- GB-A- 2 200 068
- US-A- 5 691 087
- US-A1- 2004 002 006
- US-A1- 2004 121 237

## Description

This application claims priority to U.S. Provisional Patent Application No. 60/666,771, filed on March 31, 2005.

### Technical Field

This invention relates generally to a current conductors and, more particularly, to a current carrier for an energy storage device.

### Background

Lead acid batteries are known to include at least one positive current collector, at least one negative current collector, current carriers connecting the various battery components together, chemically active paste on the current collectors, and an electrolytic solution including, for example, sulfuric acid (H₂SO₄) and distilled water. Ordinarily, both the positive and negative current collectors in a lead acid battery are constructed from lead. The role of these lead current collectors is to transfer electric current to and from the battery terminals through internal current carriers during the discharge and charging processes. Lead current collectors are suitable for effectively collecting and transferring current to the current carriers. Lead, however, is a dense material. Therefore, current collectors made of lead significantly add to the overall weight of conventional lead acid batteries.

Further, a notable limitation on the durability of lead acid batteries is caused by corrosion of lead-based positive current collectors and current carriers. Once the sulfuric acid electrolyte is added to the battery and the battery is charged, the positive current collectors and current carriers are continually subjected to corrosion due to exposure to sulfuric acid and to the anodic potentials of the positive plate (i.e., the positive current collector together with the chemically active paste). One of the most damaging effects of this corrosion is volume expansion. Particularly, as the lead current collectors and current carriers corrode, lead dioxide is formed from the lead source metal of the current collector and current carriers. This lead dioxide corrosion product has a greater volume than the lead source material consumed to create the lead dioxide. Corrosion of the lead source material and the ensuing increase in volume of the lead dioxide corrosion product is known as volume expansion.

Volume expansion induces mechanical stresses on corroding elements that deform and stretch the current collectors and carriers. At a total volume increase of the current collector of approximately 4% to 7%, the current collector may fracture. As a result, battery capacity drops, and eventually, the battery will reach the end of its service life. Further, such a fracture of a current carrier can prevent current from flowing to or from a particular current collector. At advanced stages of corrosion, internal shorting within the current collector and rupture of the cell case can occur. Both of these corrosion effects may lead to failure of one or more of the cells within the battery.

One method of extending the service life of a lead acid battery is to increase the corrosion resistance of the battery elements. Several methods have been proposed for inhibiting the corrosion process in lead acid batteries. Because carbon does not oxidize at the temperatures at which lead acid batteries generally operate, some of these methods have involved using carbon in various forms to slow or prevent the detrimental corrosion process in lead acid batteries. For example, U.S. Patent No. 5,512,390 (hereinafter the '390 patent) discloses a lead acid battery that includes current collectors made from graphite plates instead of lead. The graphite plates have sufficient conductivity to function as current collectors, and they are more corrosion resistant than lead. Substituting graphite plates for the lead current collectors may, therefore, lengthen the life of a lead acid battery.

While the battery of the '390 patent may potentially offer a lengthened service life as a result of reduced corrosion at the positive plate, the graphite plates of the '390 patent are problematic. For example, the graphite plates of the '390 patent are dense, flat sheets of material each having a relatively small amount of surface area. Unlike lead electrode plates of a conventional lead acid battery, which are generally patterned into a grid-like structure to increase the available surface area of the plates, the graphite plates of the '390 patent are smooth sheets with no patterning. In lead acid batteries, an increase in surface area of the current collector may increase the specific energy of the battery and, therefore, may translate into improved battery performance. More surface area on the current collectors may also lead to a reduction in the time required for charging and discharging of the battery. The relatively small surface area of the graphite plates of the '390 patent results in poorly performing batteries that have slow charging speeds.

Additionally, the graphite plates of the '390 patent lack the toughness of lead current collectors. The dense graphite plates of the '390 patent are brittle and may fracture when subjected to physical shock or vibration. Such physical shock and vibration commonly occur in vehicular applications, for example. Any fracturing of the graphite plates would lead to the same problems caused by volume expansion of ordinary lead current collectors. Therefore, despite offering an increased resistance to corrosion compared to conventional lead current collectors, the brittle nature of the graphite plates of the '390 patent could actually result in battery service lives shorter than those possible through use of ordinary lead current collectors.

Other related references are described as follows. U.S. Patent Application Publication No. 2004/0121237 Al discloses a composite material including a first carbon foam structure including a network of pores and a second carbon foam structure including a network of pores. U.S. Patent Application Publication No. 2004/0002006 Al discloses a battery having a current collector constructed of carbon foam. U.S. Patent No. 5,691,087 discloses a sealed lead-acid cell or battery including positive plates made from an alloy of lead, calcium, tin and silver.

### Summary of the invention

According to the present invention a current collector plate as claimed in claim 1 is provided. A lead acid battery according to the present invention is claimed in claim 12. The subclaims show examples for such a collector plate or battery, for example.

One aspect of the present invention includes a current collector plate for an energy storage device. The current collector plate includes a first current collector and a bonding layer connected to the first current collector. At least one current carrier is disposed at least partially between the first current collector and the bonding layer.

### Brief Description of the Drawings

The accompanying drawings, which are incorporated in and constitute a part of this specification, illustrate exemplary embodiments of the invention and, together with the written description, serve to explain the principles of the invention. In the drawings:

Fig. 1A is a pictorial representation of a current collector plate in accordance with an exemplary embodiment of the present invention;

Fig. 1B is a cross-sectional view of the current collector plate of Fig. 1A taken along the line 1B;

Fig. 2A is a pictorial representation of a current carrier in accordance with an exemplary embodiment of the present invention;

Fig. 2B is a pictorial representation of a current collector and a current carrier according to an exemplary embodiment of the present invention;

Fig. 3A is a pictorial representation of another current carrier in accordance with an exemplary embodiment of the present invention;

Fig. 3B is a pictorial representation of another current collector and current carrier according to an exemplary embodiment of the present invention;

Fig. 4 is a diagrammatic cut-away representation of a battery in accordance with an exemplary embodiment of the present invention.

### Detailed Description

In the following description, reference is made to the accompanying drawings that form a part thereof, and in which is shown by way of illustration specific exemplary embodiments in which the invention may be practiced. These embodiments are described in sufficient detail to enable those skilled in the art to practice the invention, and it is to be understood that other embodiments may be utilized and that changes may be made without departing from the scope of the present invention. The following description is, therefore, not to be taken in a limited sense. Wherever possible, the same reference numbers are used throughout the drawings to refer to the same or like parts.

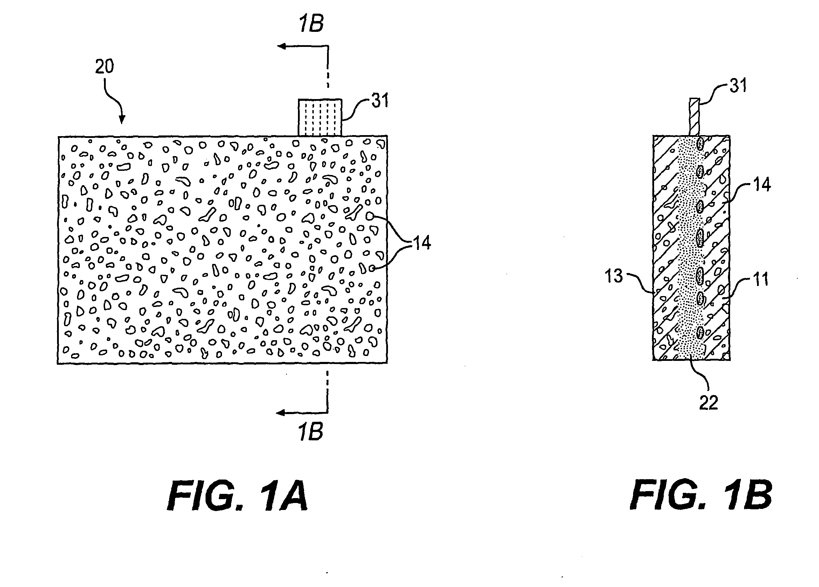

Figs. 1A and 1B illustrate a current collector plate 20 consistent with an exemplary embodiment of the invention. Current collector plate 20 may include current collectors 11 and 13, which may be joined together by an optional bonding layer 22. While the exemplary embodiment shown in Figs. 1A and 1B includes two current collectors 11 and 13, other embodiments of the invention may include only a single current collector 11 or 13. Alternatively, current collector plate 20 may include more than two current collectors.

One or both of current collectors 11 and 13 include carbon or graphite foam. Carbon foam is lightweight and electrically conductive. In certain forms, carbon foam may have a density of less than about 0.6 gm/cm³ and offer sheet resistivity values of less than about 1 ohm/cm. Carbon is also resistant to corrosion, and therefore, current collector plate 20 may be used, for example, in the corrosive environment of a lead acid battery.

The disclosed foam material may include any carbon-based material having a reticulated pattern including a three-dimensional network of struts and pores. The foam may comprise either or both of naturally occurring and artificially derived materials.

Graphite foam (i.e., a type of carbon foam) may also be used to form current collectors 11 and 13. One such graphite foam, under the trade name PocoFoam™, is available from Poco Graphite, Inc. The density and pore structure of graphite foam may be similar to carbon foam. A primary difference between graphite foam and carbon foam is the orientation of the carbon atoms that make up the structural elements of the foam. For example, in carbon foam, the carbon may be primarily amorphous. In graphite foam, however, much of the carbon is ordered into a graphite, layered structure. Because of the ordered nature of the graphite structure, graphite foam offers higher conductivity than carbon foam. PocoFoam™ graphite foam exhibits electrical resistivity values of between about 100 :∑/cm and about 400 :∑/cm.

Bonding layer 22 may attach current collectors 11 and 13 together and provide structural support for current collector plate 20. In certain embodiments, e.g., where current collectors 11 and 13 include carbon foam, current collectors 11 and 13 may include a network of pores 14. These pores may facilitate bonding of collectors 11 and 13 together by allowing the material of bonding layer 22 to penetrate one or both of current collectors 11 and 13. A variety of materials may be used as bonding layer 22. Bonding layer 22 may be either electrically conductive or non-conductive. Further, bonding layer 22 may include polymers (e.g., polypropylene), epoxies, metals, conductive polymers, ceramics, rubber, composites (e.g., carbon fibers dispersed in polymer matrix), and any combination thereof.

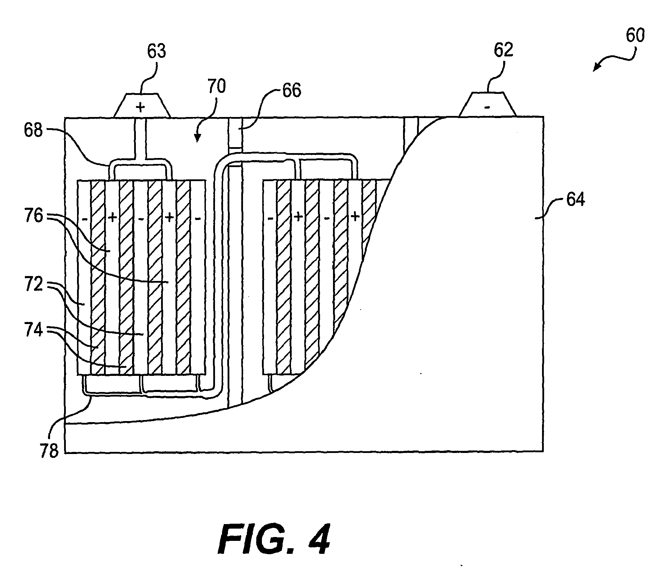

Current collector plate 20 also includes at least one current carrier 31 disposed at least partially between one of current collectors 11 and 13 and bonding layer 22. Current carrier 31 may electrically contact one or both of current collectors 11 and 13. Current carrier 31 also includes a section that extends outside and away from the current collector to serve as a means for establishing an electrical connection between current collector plate 20 and external circuitry. Further, this external section may have various different dimensional configurations depending on a particular application. For example, the external section of current carrier 31 may be formed as a tab-like projection, as shown in Figs. 1A and 1B, or the external section of current carrier 31 may have a length sufficient to provide a substantial portion of the internal connections in a battery, as illustrated, for example by current carriers 68 and 78 shown in Fig. 4.

Current carrier 31 includes at least one of carbon fiber cloth, carbon fiber tape, unwoven carbon fiber cloth, a carbon fiber, a plurality of carbon fibers, or a bundle of carbon fibers. Further, current carrier 31 may include graphite fiber cloth, graphite fiber tape, unwoven graphite fiber cloth, a graphite fiber, a plurality of graphite fibers, a bundle of graphite fibers, and any combination thereof.

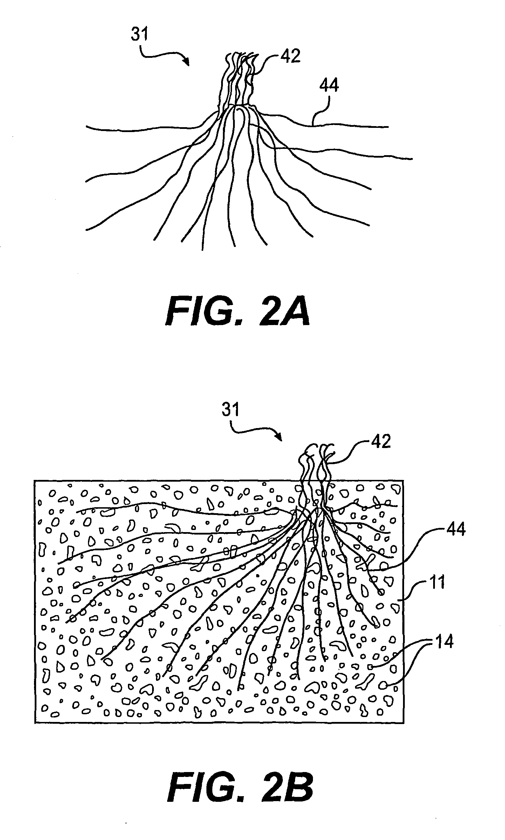

Fig. 2A illustrates an exemplary embodiment of the invention in which current carrier 31 includes a bundle 42 of carbon fibers 44. Bundle 42 may include any number of carbon fibers 44 (e.g, 1, 2, 10, 100, 1000, 10,000, or more). As the number of carbon fibers 44 present in current carrier 31 increases, the amount of current that current carrier 31 may carry also may increase. Carbon fibers 44 of bundle 42 may be graphite fibers, which may offer increased conductivity with respect to carbon fibers.

Fig. 2B illustrates an exemplary configuration of current carrier 31 with respect to current collector 11. For example, current carrier 31 may include a bundle 42 of carbon fibers 44. At least a portion of bundle 42 may extend beyond the edge of current collector 11. In another portion of bundle 42, for example, a portion that contacts current collector 11, carbon fibers 44 may be splayed apart in a fan-like, or other, pattern. Spreading apart carbon fibers 44, as shown in Fig. 2B, may provide a relatively even distribution of carbon fibers 44 on the surface of current collector 11. Such a distribution may help to maintain good electrical contact between current collectors 11 and/or 13 and current carrier 31 and minimize the distance that charge must travel through the current collectors 11, 13 before encountering current carrier 31. Additionally, arranging carbon fibers 44 in a splayed pattern, as shown in Figs. 2A and 2B, may provide a certain amount of structural support to current collectors 11 and/or 13.

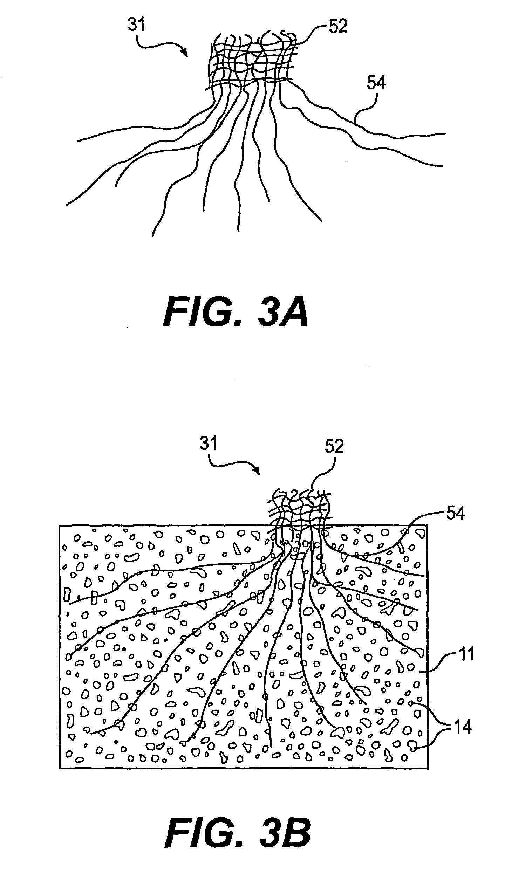

Fig. 3A illustrates another exemplary embodiment of the invention in which current carrier 31 includes a plurality of carbon fibers 54 at least partially woven together in the form of a woven cloth 52. Similar to bundle 42 of carbon fibers 44, carbon fibers 54 of woven cloth 52 may also comprise graphite fibers.

Fig. 3B illustrates another exemplary configuration of current carrier 31 with respect to current collector 11. For example, current carrier 31 may include woven cloth 52 formed of a plurality of carbon fibers 54. At least a portion of woven cloth 52 may extend beyond the edge of current collector 11. In another portion of woven cloth 52, for example, a portion that contacts current collector 11, carbon fibers 54 may be splayed apart in a fan-like pattern. Spreading apart carbon fibers 54, as shown in Fig. 3B, may provide a relatively even distribution of carbon fibers 54 on the surface of current collector 11. Similar to the embodiment shown in Figs. 2A and 2B, arranging the carbon fibers in a splayed apart pattern, as illustrated by Figs. 3A and 3B, may help to maintain good electrical contact between current collectors 11 and/or 13 and current carrier 31, and may provide structural support to current collectors 11 and/or 13.

Current carrier 31 may optionally include a metal coating. Such a metal coating may improve the durability of current carrier 31 and promote good electrical contact with both external circuitry and current collectors 11 and/or 13. A metal coating on current carrier 31 may also encourage lead wetting of current carrier 31. Such lead wetting may enable soldering of various conductors to current carrier 31 or the use of molded lead straps (e.g., where a portion of one or more of the current carriers is submerged in a mold containing molten lead, which is allowed to cool to form a lead strap) to connect to current carrier 31. While the metal coating may include any of a wide range of metals, in one exemplary embodiment, the metal coating may comprise silver.

Current collector plate 20 may also include a chemically active paste disposed on one or both of current collectors 11 and 13. Chemical reactions in the paste disposed on the current collectors enable storage and release of energy in a battery. The composition of this paste determines whether a particular current collector plate functions as either a positive or a negative plate.

Initially, the chemically active paste that is applied to the current collectors 11 and/or 13 of both the positive and negative current collector plates may be substantially the same in terms of chemical composition. For example, the paste may include lead oxide (PbO). Other oxides of lead may also be suitable. The paste may also include various additives including, for example, varying percentages of free lead, structural fibers, conductive materials, carbon, and extenders to accommodate volume changes over the life of the battery.

Once the chemically active paste is deposited on current collectors 11 and/or 13, the positive and negative current collector plates are formed. To create a positive current collector plate, the chemically active paste may optionally be cured at elevated temperatures and/or humidity levels to encourage growth of lead sulfate crystals within the paste. A negative current collector plate requires no curing. With the exception of an optional step of drying, the lead oxide paste may be left "as is" on the negative current collector plates. Once the positive and negative plates have been prepared, they may be assembled together to form a battery.

Fig. 4 illustrates a battery 60 in accordance with an exemplary embodiment of the invention. Battery 60 includes a housing 64, negative terminal 62, and positive terminal 63. At least one cell 70 is disposed within housing 64. While only one cell 70 is necessary, multiple cells may be connected in series or in parallel to provide a desired total potential of battery 60. Each cell 70 may be separated from adjacent cells 70 by a cell separator 66.

Each cell 70 may be composed of one or more positive plates 76 alternated with one or more negative plates 72 and immersed in an electrolytic solution including, for example, sulfuric acid and distilled water. Plate separators 74 may be disposed between positive plates 76 and negative plates 72 to reduce or eliminate shorting between the positive and negative plates. Both positive plates 76 and negative plates 72 may include current collector plates 20 as illustrated, for example, in Figs. 1A and 1B. The current collectors 11 and 13 included in the negative plates 72 and/or the positive plates 76 may include carbon foam or other types of current collectors known in the art.

Each cell 70 of battery 60 may include current carriers, such as current carriers 68 and current carriers 78 shown in Fig. 4. Current carriers 68 and 78 may be configured in a variety of different ways and may include any of a wide range of materials. For example, current carriers 68 and 78 may be configured similar to current carrier 31, as shown in any of Figs. 1A, 1B, 2A, 2B, 3A, and 3B. Further, current carriers 68 and 78 may include any of the materials described above with respect to current carrier 31. In one exemplary embodiment of the invention, one or more of current carriers 68 and 78 include carbon fiber bundles, and more specifically, graphite fiber bundles. In yet another exemplary embodiment of the invention, one or more of current carriers 68 and 78 include woven carbon fiber cloth, and more specifically, woven graphite fiber cloth.

In each cell 70, all of positive plates 76 may be connected together via current carriers 68 or 78. Similarly, all of negative plates 72 may be connected together via current carriers 68 or 78. It should be noted, however, that other possible wiring configurations are possible for each cell and may even be more appropriate depending on a particular application. In an exemplary embodiment of the invention, cells 70 of battery 60 may be connected together in series such that the positive plates 76 of one cell 70 are connected to the negative plates 72 of an adjacent or another cell 70. Further, the positive current carriers of the cell at the highest potential may be connected to an electrical contact on the battery housing to form positive terminal 63. Similarly, the negative current carriers of the cell at the lowest potential may be connected to an electrical contact on the battery housing to form negative terminal 62.

As a nomenclature issue, determining whether a particular current carrier is considered a positive current carrier or a negative current carrier depends on the cell with which a particular current carrier is compared. For example, a particular current carrier may be a positive current carrier with respect to one cell (i.e., the current carrier emanates from the positive plates of the cell), and the same current carrier may be a negative current carrier with respect to another cell (i.e., the current carrier emanates from the negative plates of the another cell). In Fig. 4, current carrier 78 is a negative current carrier with respect to cell 70. Current carrier 78, however, is also a positive current carrier with respect to the cell adjacent to cell 70.

The positive and negative current carriers of the current collector plates and cells of battery 60 may be connected together in a variety of different ways. For example, the current carriers may be soldered, clamped, braided, spliced, twisted, or any combination thereof in order to join two or more current carriers together. Further, one or more current carriers may be joined together using molded lead straps, tape, ties, nuts, clamps, or any other appropriate coupling device or method.

### Industrial Applicability

The current collectors and current carriers of the present invention are useful in any of a wide variety of applications where materials with corrosion resistance, high surface area, electrical conductivity, or low weight would be desirable. In one possible application, the current collectors and current carriers of the present invention may serve as components of a current collector plate in a battery, such as a lead acid battery, for example. These current collectors and current carriers may support the chemically active components of the battery and promote the flow of current between components and terminals of the battery.

Because current collectors 11, 13 and current carriers 31, 68, 78 may include carbon, (e.g., carbon/graphite foam and carbon/graphite fibers) these elements may resist corrosion even when exposed to sulfuric acid and to anodic potentials of the positive plate in a lead acid battery. As a result, the battery may offer a significantly longer service life as compared to batteries without carbon/graphite foam current collectors and/or carbon/graphite current carriers.

Also, the carbon foam of the current collectors 11, 13 includes a network of pores 14, which may provide a large amount of surface area for each current collector 11, 13. Current collectors composed of carbon foam may exhibit more than 2000 times the amount of surface area provided by conventional lead current collectors. The large amount of surface area associated with current collectors 11, 13 may translate into batteries having large specific energy and power values. For example, because of the open cell, porous network and relatively small pore size of the carbon foam materials, the chemically active paste of the positive and negative plates is intimately integrated with the conductive carbon material of current collectors 11, 13. Therefore, electrons produced in the chemically active paste at a particular reaction site must travel only a short distance through the paste before encountering the conductive carbon foam of current collectors 11, 13. This current may then be carried by the plurality of splayed conductive fibers of current carrier 31, for example.

As a result, batteries with current collectors 11, 13 of carbon foam and current carriers 31 of carbon/graphite fibers may offer improved specific energy and power values. In other words, these batteries, when placed under a load, may sustain their voltage above a predetermined threshold value for a longer time than batteries including either lead current collectors or graphite plate current collectors with conventional current carriers. Also, these batteries may discharge more quickly than batteries including either lead current collectors or graphite plate current collectors.

The increased specific power values offered by batteries of the present invention also may translate into reduced charging times. Therefore, the batteries may be suitable for applications in which charging energy is available for only a limited amount of time. For instance, in vehicles, a great deal of energy is lost during ordinary braking. This braking energy may be recaptured and used to charge a battery of, for example, a hybrid vehicle. The braking energy, however, is available only for a short period of time (i.e., while braking is occurring). In view of their reduced charging times, the batteries of the present invention may provide an efficient means for storing such braking energy.

The porous nature of the carbon foam current collectors also creates an improved substrate for retaining the chemically active paste of the energy storage device. By impregnating the paste into pores of the carbon foam current collectors, the paste is less likely to separate from the current collectors. This property is important in vehicle and other applications where vibration is common.

Further, by including current carriers composed of carbon fibers and current collectors of carbon foam, which has a density of less than about 0.6 g/cm3, a battery may weigh substantially less than batteries including either lead current collectors or graphite plate current collectors.

It will be apparent to those skilled in the art that various modifications and variations can be made in the described current carrier and energy storage device without departing from the scope of the invention. Other embodiments of the invention will be apparent to those skilled in the art from consideration of the specification and practice of the invention disclosed herein.

## Claims

1. A current collector plate (20) for an energy storage device, the current collector plate (20) comprising:
a first current collector (11);
a bonding layer (22) connected to the first current collector (11); and
at least one current carrier (31) disposed at least partially between the first current collector (11) and the bonding layer (22);
wherein the first current collector includes carbon or graphite foam;
wherein at least a portion of the at least one current carrier (31) extends beyond an edge of the first current collector, and
wherein the at least one current carrier (31) includes at least one of carbon fiber cloth, carbon fiber tape, unwoven carbon fiber cloth, a carbon fiber (44,54), a plurality of carbon fibers (44, 54), or a bundle (42) of carbon fibers (44, 54).

2. The current collector plate of claim 1, further including a second current collector (13) connected to the bonding layer (22).

3. The current collector plate of claim 2, wherein at least one of the first current collector (11) and the second current collector (13) is carbon foam.

4. The current collector plate of any of claims 1 to 3, wherein the carbon fibers (44, 54) are graphite fibers.

5. The current collector plate of any of claims 1 to 3, wherein the bundle (42) of carbon fibers (44, 54) includes a first section disposed between the first current collector (11) and the bonding layer (22), and a second section that protrudes from the current collector plate (20).

6. The current collector plate of claim 5, wherein at least a portion of the carbon fibers (44, 54) in the first section are splayed apart.

7. The current collector plate of claim 1, wherein the at least onc current carrier (31) includes carbon fiber cloth.

8. The current collector plate of claim 7, wherein the carbon fiber cloth includes a first section disposed between the first current collector (11) and the bonding layer (22), and a second section that protrudes from the current collector plate (20).

9. The current collector plate of claim 8, wherein at least a portion of the carbon fiber cloth in the first section includes carbon fibers (44, 54) that are splayed apart.

10. The current collector plate of claim 8, wherein at least a portion of the carbon fiber cloth in the second section includes a metal coating.

11. The current collector plate of claim 1, wherein the bonding layer (22) includes a polymer.

12. A lead acid battery (60) comprising at least one cell (70), the ar least one cell (70) including:
at least one positive current collector plate (76) comprising the current collector plate of claim 1 ; and
at least one negative current collector plate (72).

13. The battery of claim 12, wherein the at least one current carrier (31) of the art least one positive current collector plate (76) includes graphite fiber cloth.

14. The battery of claim 12, wherein the at least one current carrier (31) of the at least one positive current collector plate (76) extends away from the first carbon foam current collector.

15. The lead acid battery of claim 12 further comprising:
a housing (64);
a positive terminal (63) and a negative terminal (62) connected to the housing; and
an electrolyte disposed within the housing;
wherein the at least one cell (70) is disposed within the housing;
wherein the at least one negative current collector plate further includes a negative current collector, a negative current carrier (78), and a lead-based chemically active paste disposed on the negative current collector;
wherein the at least one positive current collector plate (76) further includes a lead-based chemically active paste disposed on the carbon foam current collector

16. The lead acid battery of claim 15, wherein the at least one current carrier (31) of the at least one positive current collector plate (76) or the negative current carrier (78) includes a bundle (42) of graphite fibers.

17. The lead acid battery of claim 15, wherein the at least one current carrier (31) of the at least one positive current collector plate (76) or the negative current carrier (78) includes graphite fiber cloth.

18. The lead acid battery of claim 15, further including a plurality of positive current collector plates (76) in the at least one cell (70), wherein the at least one current carrier (31) of each of the plurality of positive current plates are connected together.

19. The lead acid battery of claim 18, further including a plurality of negative current collector plates in the at least one cell (70), wherein the negative current carriers (78) of the plurality of negative current plates are connected together.

20. The lead acid battery of claim 15, wherein the at least one negative current collector plate includes a carbon foam negative current collector.

## Patentansprüche

1. Eine Stromkollektorplatte (20) für eine Energiespeichervorrichtung, wobei die Stromkollektorplatte (20) aufweist:
einen ersten Stromkollektor (11),
eine Bindeschicht (22), die mit dem ersten Stromkollektor (11) verbunden ist, und
mindestens einen Stromträger (31), der zumindest teilweise zwischen dem ersten Stromkollektor (11) und der Bindeschicht (22) angeordnet ist,
wobei der erste Stromkollektor Kohlenstoff- oder Graphitschaum aufweist,
wobei sich zumindest ein Abschnitt des mindestens einen Stromträgers (31) über einen Rand des ersten Stromkollektors hinaus erstreckt, und
wobei der mindestens eine Stromträger (31) mindestens eines von Kohlenstoff-Faser-Gewebe, Kohlenstoff-Faser-Band, ungewebtem Kohlenstoff-Faser-Gewebe, einer Kohlenstoff-Faser (44, 54), einer Mehrzahl von Kohlenstoff-Fasern (44, 54) oder einem Bündel (42) von Kohlenstoff-Fasern (44, 54) aufweist.

2. Die Stromkollektorplatte gemäß Anspruch 1, ferner einen zweiten Stromkollektor (13) aufweisend, der mit der Bindeschicht (22) verbunden ist.

3. Die Stromkollektorplatte gemäß Anspruch 2, wobei mindestens einer von dem ersten Stromkollektor (11) und dem zweiten Stromkollektor (13) Kohlenstoffschaum ist.

4. Die Stromkollektorplatte gemäß einem der Ansprüche 1 bis 3, wobei die Kohlenstoff-Fasern (44, 54) Graphit-Fasern sind.

5. Die Stromkollektorplatte gemäß einem der Ansprüche 1 bis 3, wobei das Bündel (42) von Kohlenstoff-Fasern (44, 54) aufweist: einen ersten Abschnitt, der zwischen dem ersten Stromkollektor (11) und der Bindeschicht (22) angeordnet ist, und einen zweiten Abschnitt, der von der Stromkollektorplatte (20) hervorsteht.

6. Die Stromkollektorplatte gemäß Anspruch 5, wobei mindestens ein Abschnitt der Kohlenstoff-Fasern (44, 54) in dem ersten Abschnitt auseinandergespreizt ist.

7. Die Stromkollektorplatte gemäß Anspruch 1, wobei der mindestens eine Stromträger (31) Kohlenstoff-Faser-Gewebe aufweist.

8. Die Stromkollektorplatte gemäß Anspruch 7, wobei das Kohlenstoff-Faser-Gewebe aufweist: einen ersten Abschnitt, der zwischen dem ersten Stromkollektor (11) und der Bindeschicht (22) angeordnet ist, und einen zweiten Abschnitt, der von der Stromkollektorplatte (20) hervorsteht.

9. Die Stromkollektorplatte gemäß Anspruch 8, wobei mindestens ein Abschnitt des Kohlenstoff-Faser-Gewebes in dem ersten Abschnitt Kohlenstoff-Fasern (44, 54) aufweist, die auseinandergespreizt sind.

10. Die Stromkollektorplatte gemäß Anspruch 8, wobei mindestens ein Abschnitt des Kohlenstoff-Faser-Gewebes in dem zweiten Abschnitt eine Metallbeschichtung aufweist.

11. Die Stromkollektorplatte gemäß Anspruch 1, wobei die Bindeschicht (22) ein Polymer aufweist.

12. Ein Bleiakkumulator (60), aufweisend mindestens eine Zelle (70), wobei die mindestens eine Zelle (70) aufweist:
mindestens eine positive Stromkollektorplatte (76), die die Stromkollektorplatte aus Anspruch 1 aufweist, und mindestens eine negative Stromkollektorplatte (72).

13. Die Batterie gemäß Anspruch 12, wobei der mindestens eine Stromträger (31) der mindestens einen positiven Stromkollektorplatte (76) Graphit-Faser-Gewebe aufweist.

14. Die Batterie gemäß Anspruch 12, wobei sich der mindestens eine Stromträger (31) der mindestens einen positiven Stromkollektorplatte (76) von dem ersten Kohlenstoffschaum-Stromkollektor weg erstreckt.

15. Der Bleiakkumulator gemäß Anspruch 12, ferner aufweisend:
ein Gehäuse (64),
einen Pluspol (63) und einen Minuspol (62), die mit dem Gehäuse verbunden sind, und
einen Elektrolyten, der innerhalb des Gehäuses angeordnet ist,
wobei die mindestens eine Zelle (70) innerhalb des Gehäuses angeordnet ist,
wobei die mindestens eine negative Stromkollektorplatte ferner einen negativen Stromkollektor, einen negativen Stromträger (78) und eine bleibasierte chemisch aktive Paste aufweist, die an dem negativen Stromkollektor angeordnet ist,
wobei die mindestens eine positive Stromkollektorplatte (76) ferner eine bleibasierte chemisch aktive Paste aufweist, die an dem Kohlenstoffschaum-Stromkollektor angeordnet ist.

16. Der Bleiakkumulator gemäß Anspruch 15, wobei der mindestens eine Stromträger (31) der mindestens einen positiven Stromkollektorplatte (76) oder der negative Stromträger (78) ein Bündel (42) von Graphit-Fasern aufweist.

17. Der Bleiakkumulator gemäß Anspruch 15, wobei der mindestens eine Stromträger (31) der mindestens einen positiven Stromkollektorplatte (76) oder der negative Stromträger (78) Graphit-Faser-Gewebe aufweist.

18. Der Bleiakkumulator gemäß Anspruch 15, ferner aufweisend eine Mehrzahl von positiven Stromkollektorplatten (76) in der mindestens einen Zelle (70), wobei der mindestens eine Stromträger (31) von jeder aus der Mehrzahl von positiven Stromkollektorplatten miteinander verbunden sind.

19. Der Bleiakkumulator gemäß Anspruch 18, ferner aufweisend eine Mehrzahl von negativen Stromkollektorplatten in der mindestens einen Zelle (70), wobei die negativen Stromträger (78) der Mehrzahl von negativen Stromplatten miteinander verbunden sind.

20. Der Bleiakkumulator gemäß Anspruch 15, wobei die mindestens eine negative Stromkollektorplatte einen negativen Kohlenstoffschaum-Stromkollektor aufweist.

## Revendications

1. Plaque de collecteur de courant (20) pour un dispositif de stockage d'énergie, la plaque de collecteur de courant (20) comprenant ;
un premier collecteur de courant (11) ;
une couche de liage (22) connectée au premier collecteur de courant (11); et
au moins un porteur de courant (31) disposé au moins partiellement entre le premier collecteur de courant (11) et la couche de liage (22);
dans laquelle le premier collecteur de courant comprend du carbone ou du graphite expansé;
dans laquelle au moins une partie de l'au moins un porteur de courant (31) s'étend au-delà d'un bord du premier collecteur de courant ; et
dans laquelle l'au moins un porteur de courant (31) comprend au moins l'un parmi une étoffe en fibres de carbone, une bande en fibres de carbone, une étoffe non-tissée en fibres de carbone, une fibre de carbone (44, 54), une pluralité de fibres de carbone (44, 54) ou un faisceau (42) de fibres de carbone (44, 54),

2. Plaque de collecteur de courant selon la revendication 1, comprenant en outre un deuxième collecteur de courant (13) connecté à la couche de liage (22).

3. Plaque de collecteur de courant selon la revendication 2, dans laquelle au moins l'un parmi le premier collecteur de courant (11) et le deuxième collecteur de courant (13) est en carbone expansé.

4. Plaque de collecteur de courant selon l'une quelconque des revendications 1 à 3, dans laquelle les fibres de carbone (44, 54) sont des fibres de graphite,

5. Plaque de collecteur de courant selon l'une quelconque des revendications 1 à 3, dans laquelle le faisceau (42) de fibres de carbone (44, 54) comprend une première section disposée entre le premier collecteur de courant (11) et la couche de liage (22), et une deuxième section qui fait saillie depuis la plaque de connecteur de courant (20).

6. Plaque de collecteur de courant selon la revendication 5, dans laquelle au moins une partie des fibres de carbone (44, 54) dans la première section sont mutuellement écartées.

7. Plaque de collecteur de courant selon la revendication 1, dans laquelle l'au moins un porteur de courant (31) comprend une étoffe en fibres de carbone.

8. Plaque de collecteur de courant selon la revendication 7, dans laquelle l'étoffe en fibres de carbone comprend une première section disposée entre le premier collecteur de courant (11) et la couche de liage (22), et une deuxième section qui fait saillie depuis la plaque de collecteur de courant (20).

9. Plaque de collecteur de courant selon la revendication 8, dans laquelle au moins une partie de l'étoffe en fibres de carbone dans la première section comprend des fibres de carbone (44, 54) qui sont mutuellement écartées.

10. Plaque de collecteur de courant selon la revendication 8, dans laquelle au moins une partie de l'étoffe en fibres de carbone dans la deuxième section comprend un revêtement métallique.

11. Plaque de collecteur de courant selon la revendication 1, dans laquelle la couche de liage (22) comprend un polymère

12. Batterie plomb-acide (60) comprenant au moins une cellule (70), l'au moins une cellule (70) comprenant:
au moins une plaque de collecteur de courant positif (76) comprenant la plaque de collecteur de courant de la revendication 1;
au moins une plaque de collecteur de courant négatif (72).

13. Batterie selon la revendication 12, dans laquelle l'au moins un porteur de courant (31) de l'au moins une plaque de collecteur de courant positif (76) comprend une étoffe en fibres de graphite.

14. Batterie selon la revendication 12, dans laquelle l'au moins un porteur de courant (31) de l'au moins une plaque de collecteur de courant positif (76) s'étend à distance du premier collecteur de courant en carbone expansé.

15. Batterie plomb-acide selon la revendication 12, comprenant en outre:
un boîtier (64);
une borne positive (63) et une borne négative (62) connectées au boîtier; et
un électrolyte disposé à l'intérieur du boîtier;
dans laquelle l'au moins une cellule (70) est disposée à l'intérieur du boîtier;
dans laquelle l'au moins une plaque de collecteur de courant négatif comprend en outre un collecteur de courant négatif, un porteur de courant négatif (78), et une pâte chimiquement active à base de plomb disposée sur le collecteur de courant négatif;
dans laquelle l'au moins une plaque de collecteur de courant positif (76) comprend en outre une pâte chimiquement active à base de plomb disposée sur le collecteur de courant en carbone expansé.

16. Batterie plomb-acide selon la revendication 15, dans laquelle l'au moins un porteur de courant (31) de l'au moins une plaque de collecteur de courant positif (76) ou le porteur de courant négatif (78) comprend un faisceau (42) de fibres de graphite.

17. Batterie plomb-acide selon la revendication 15, dans laquelle l'au moins un porteur de courant (31) de l'au moins une plaque de collecteur de courant positif (76) ou le porteur de courant négatif (78) comprend une étoffe en fibres de graphite

18. Batterie plomb-acide selon la revendication 15, comprenant en outre une pluralité de plaques de collecteur de courant positif (76) dans l'au moins une cellule (70), dans laquelle l'au moins un porteur de courant (31) de chacune de la pluralité de plaques de courant positif est connecté aux autres.

19. Batterie plomb-acide selon la revendication 18, comprenant en outre une pluralité de plaques de collecteur de courant négatif dans l'au moins une cellule (70), dans laquelle les porteurs de courant négatif (78) de la pluralité de plaques de courant négatif sont connectés ensemble.

20. Batterie plomb-acide selon la revendication 15, dans laquelle l'au moins une plaque de collecteur de courant négatif comprend un collecteur de courant négatif en carbone expansé,
